# EUROPÄISCHE PATENTANMELDUNG

(11) **EP 1 587 256 A1**
(43) Veröffentlichungstag der Anmeldung: **19.10.2005**
(21) Anmeldenummer: 04009039.1
(22) Anmeldetag: 15.04.2004
(51) Int. Cl.: H04L 12/56, H04B 7/005

(54) **Verfahren zur Datenübertragung in einem Funkkommunikationssystem**

(71) Anmelder: SIEMENS AKTIENGESELLSCHAFT, 80333 München (DE)
(72) Erfinder: Hofmann, Jürgen, 86504 Merching (DE)

(57) **Zusammenfassung**

Die Erfindung betrifft ein Verfahren zur Datenübertragung in einem Funkkommunikationssystem, bei dem von einer Basisstation zumindest ein Datenblock zu Funkkommunikationsendgeräten gemäß einer Punkt-zu-Mehrpunkt-Übertragung gesendet wird. Eine Anzahl empfangender Funkkommunikationsendgeräte meldet ein Informationssignal bezüglich des Empfangs des Datenblocks zur Basisstation über einen gemeinsam nutzbaren Rückkanal zurück. Seitens jedes Funkkommunikationsendgeräts, das das Informationssignal sendet, wird eine Einstellung der Sendeleistung des Informationssignals in Abhängigkeit der Entfernung zwischen Basisstation und jeweiligem Funkkommunikationsendgerät durchgeführt.

## Beschreibung

Die Erfindung betrifft ein Verfahren zur Datenübertragung in einem Funkkommunikationssystem gemäß dem Oberbegriff des Anspruchs 1.

Im Rahmen der Standardisierung von Netzwerkfunktionalitäten bei UTRAN (UTRAN = UMTS Terrestrial Radio Access Network) und bei GERAN (GERAN = GSM EDGE Radio Access Network) wird die Unterstützung einer so genannten MBMS-Datenübertragung (Multimedia Broadcast/Multicast Service) definiert. Ziel einer derartigen MBMS-Datenübertragung ist es, Dienste mit hohen Datenraten, beispielsweise eines Multimedia-Dienstes, mit Hilfe einer unidirektionalen Punkt-zu-Mehrpunkt-Übertragung einer Vielzahl von Teilnehmern gleichzeitig zur Verfügung zu stellen.

Aus der europäischen Patentanmeldung mit dem Anmeldeaktenzeichen EP 03425632.1 vom 29.09.2003 ist eine MBMS-Datenübertragung mit Rückkanal bekannt. Dabei wird ein MBMS-Datenblock von einer Basisstation in Abwärtsrichtung an mehrere Funkkommunikationsendgeräte im Rahmen einer Punkt-zu-Mehrpunkt-Funkübertragung übertragen. Eine Anzahl empfangender Teilnehmer-Funkkommunikationsendgeräte meldet ein Informationssignal über den gemeinsamen Rückkanal zur Basisstation zurück. Das Informationssignal erlaubt eine Aussage über den Empfang des von der Basisstation gesendeten Datenblocks an den jeweiligen Funkkommunikationsendgeräten. Typischerweise wird hier ein so genanntes NACK-Signal (not-acknowledged-Signal) verwendet, das einen fehlerhaften Empfang bzw. einen nicht erfolgten Empfang des Datenblocks an die Basisstation signalisiert.

Dieses Informationssignal wird zur Basisstation über einen gemeinsam nutzbaren Funkkanal, auf den die NACK-Signale aller betroffener Funkkommunikationsendgeräte übertragen werden und auf den damit alle Funkkommunikationsendgeräte gemeinsam zugreifen, zurückgemeldet.

Durch den Zugriff aller Teilnehmer auf den gemeinsamen Rückkanal überlagern sich die einzelnen NACK-Signale in den jeweiligen Sendeleistungen. Dadurch werden benachbarte Übertragungskanäle durch Intrazell-Interferenzen gestört. Zusätzlich werden benachbarte Funkzellen durch Interzell-Interferenzen gestört. Durch diese Interferenzen können im ungünstigsten Fall Einzelverbindungen ausgelöst bzw. blockiert werden.

Es ist daher Aufgabe der vorliegenden Erfindung, ein Verfahren für eine Punkt-zu-Mehrpunkt-Übertragung, bei der ein Rückkanal der eingangs beschriebenen Art verwendet wird, anzugeben, bei dem durch die gemeinsame Verwendung des Rückkanals zusätzlich entstehende Interferenzen innerhalb der Funkzelle weitgehend vermieden werden.

Diese Aufgabe wird durch die Merkmale des Patentanspruchs 1 gelöst. Vorteilhafte Weiterbildungen sind in den Unteransprüchen angegeben.

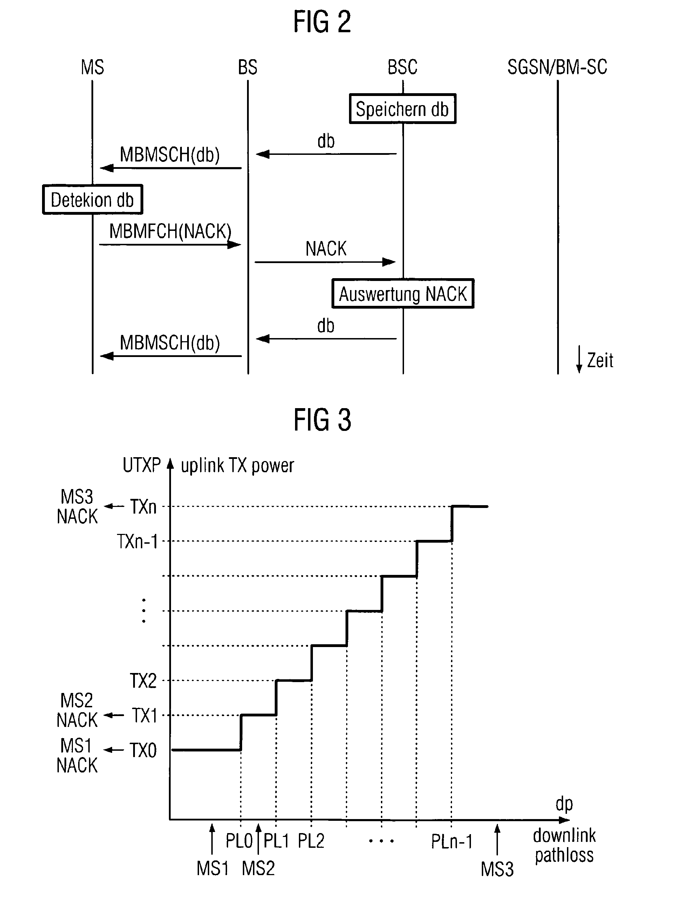

Beim erfindungsgemäßen Verfahren wird von einer Basisstation zumindest ein Datenblock zu einer Anzahl von Funkkommunikationsendgeräten gemäß einer Punkt-zu-Mehrpunkt-Übertragung gesendet. Eine Anzahl empfangender Funkkommunikationsendgeräte meldet ein Informationssignal zur Basisstation zurück, das eine Aussage über den Empfang des Datenblocks an den jeweiligen Funkkommunikationsendgeräten erlaubt. Die jeweiligen Informationssignale werden zur Basisstation über einen gemeinsam nutzbaren Rückkanal zurückgemeldet. Dieser entspricht beispielsweise bei einer MBMS-Datenübertragung in einem GERAN-Funkkommunikationssystem dem nachfolgend in FIG 2 beschriebenen MBMSFCH-Rückkanal.

Nachfolgend wird vorausgesetzt, dass während der Dauer der Punkt-zu-Mehrpunkt-Verbindung keine dedizierten, individuell zugeordneten Signalisierungskanäle zwischen der Basisstation und einem ausgewählten Funkkommunikationsendgerät zur Verfügung stehen, die die Übermittlung von Messinformation vom Funkkommunikationsendgerät zur Basisstation oder zur Übermittlung von Befehlen zur individuellen Sendeleistungseinstellung von der Basisstation zum Funkkommunikationsendgerät ermöglichen würden.

In einer ersten Ausführungsform wird erfindungsgemäß durch die Basisstation jedem Funkkommunikationsendgerät eine Zuordnungsvorschrift zur Festlegung der Sendeleistung übermittelt. Basierend auf dieser Zuordnungsvorschrift wählt ein jeweiliges Funkkommunikationsendgerät eine Sendeleistung aus, mit der es sein Informationssignal an die Basisstation über den gemeinsamen Rückkanal in Aufwärtsrichtung überträgt.

Erfindungsgemäß berücksichtigt die übermittelte Zuordnungsvorschrift die Entfernung zwischen der Basisstation und einem betrachteten Funkkommunikationsendgerät, so dass die Einstellung der Sendeleistung des Informationssignals seitens des betrachteten Funkkommunikationsendgeräts in Abhängigkeit von der Entfernung durchgeführt wird. Dadurch wird erreicht, dass eine angemessene Sendeleistung, die vorteilhafterweise zum Empfang des Informationssignals seitens der Basisstation gerade noch ausreicht, eingestellt wird.

Zur Berücksichtigung der Entfernung wird seitens der Basisstation in Abwärtsrichtung zu den Funkkommunikationsendgeräten ein Signal mit vorbekannter Leistung ausgesendet. Dessen Übertragungsverluste sind somit seitens der Funkkommunikationsendgeräte bestimmbar, die der Basisstation jeweils zugeordnet sind.
Ein an einem betrachteten Funkkommunikationsendgerät bestimmter Übertragungsverlust wird als Maß für die Entfernung zwischen Basisstation und dem Funkkommunikationsendgerät verwendet. Die von der Basisstation übermittelte Zuordnungsvorschrift wiederum ordnet jeweiligen Übertragungsverlusten entsprechende Sendeleistungen für das in Aufwärtsrichtung zu sendende Informationssignal zu. Somit wird der seitens des betrachteten Funkkommunikationsendgeräts bestimmte Übertragungsverlust zur Einstellung der Sendeleistung des Informationssignals seitens des Funkkommunikationsendgeräts verwendet.

Für den Fall einer von der Basisstation übertragenen Zuordnungsvorschrift kann diese während des Betriebs aktualisiert werden. Dies erfolgt basierend auf einer Auswertung der Überlagerung der Informationssignale im gemeinsamen Rückkanal bzw. durch Auswertung einer Interferenzsituation in den Funkkanälen, die zum Rückkanal gleich bzw. benachbart sind. Dadurch wird erreicht, dass die Sendeleistungen in Abhängigkeit vom Funkverkehrsaufkommen gegebenenfalls nachgeregelt werden können.

Vorteilhafterweise wird die Zuordnungsvorschrift seitens der Basisstation unter Verwendung eines so genannten Broadcast-Kanals rundgesendet, wodurch vorteilhafterweise Funkübertragungsressourcen eingespart werden.

In einer weiteren Ausführungsform kann für den Fall, dass die Zuordnungsvorschrift fester Teil eines Standards ist, die Übertragung der Zuordnungsvorschrift von der Basisstation zu den Funkkommunikationsendgeräten entfallen, sofern die Zuordnungsvorschrift seitens der Funkkommunikationsendgeräte durch Einspeicherung vorbekannt ist. Diese Ausführungsform wird insbesondere beim Übertragungsstandard 3GPP GERAN bzw. 3GPP UTRAN als vorteilhaft erachtet.

Bei denjenigen Funkkommunikationsendgeräten, die eine größere Entfernung zur Basisstation aufweisen, wird eine höhere Sendeleistung zur Übertragung des Informationssignals eingestellt, während bei Funkkommunikationsendgeräten, die eine geringere Entfernung zur Basisstation aufweisen, eine geringere Sendeleistung eingestellt wird. Somit weisen Funkkommunikationsendgeräte, die sich am Rande einer durch die Basisstation versorgten Funkzelle befinden, eine höhere Informationssignal-Sendeleistung auf, als diejenigen Funkkommunikationsendgeräte, die sich in der Nähe der Basisstation befinden. Letztere verwenden vorteilhafterweise eine Sendeleistung, die den Empfang des Informationssignals seitens der Basisstation gerade noch sicherstellt.

Besonders vorteilhaft werden seitens der Basisstation oder vergleichbarer Einrichtungen anderer Standards, wie beispielsweise einem NodeB beim 3GPP-UTRAN-Standard, vorbestimmte Schwellwerte bei der Zuordnung von Übertragungsverlusten zu Sendeleistungswerten verwendet.

Nachfolgend wird die Erfindung anhand einer Zeichnung näher erläutert. Dabei zeigt:
- FIG 1: ein Blockschaltbild eines beispielhaften Funk-Kommunikationssystems, bei dem das erfindungsgemäße Verfahren verwendbar ist,
- FIG 2: bezogen auf FIG 1 ein Ablaufdiagramm für eine MBMS-Datenblockübertragung, und
- FIG 3: eine Zuordnungsvorschrift von Übertragungsverlusten zu Sendeleistungen beim erfindungsgemäßen Verfahren.

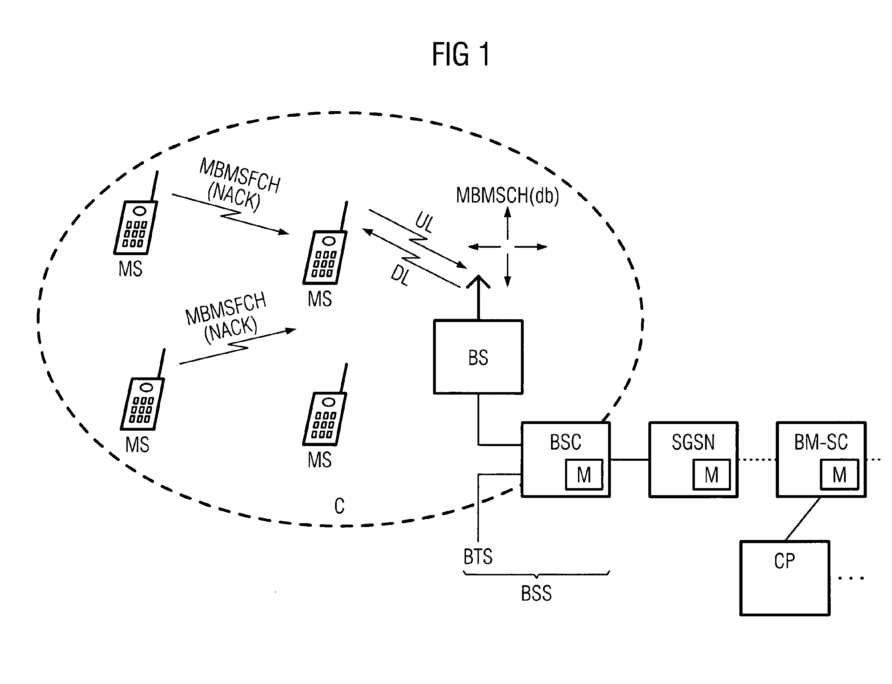

FIG 1 zeigt ein strukturelles Blockschaltbild eines beispielhaften Funkkommunikationssystems, bei dem das erfindungsgemäße Verfahren verwendet werden kann.

Bei einem beispielhaften GSM-Mobilfunksystem ist eine Basisstation BS, die zumindest eine Funkzelle C ausleuchtet, über eine Basisstationssteuerung BSC mit einer nicht dargestellten Mobilvermittlungsstelle ("Mobile Switching Center", MSC) verbunden. Die Kombination mehrerer Basisstationen BS und einer zugeordneten Basisstationssteuerung BSC wird auch als Basisstationssubsystem BSS bezeichnet. Jede Basisstation BS kann über zugewiesene Funkressourcen mit mobilen oder stationären Funkkommunikationsendgeräten MS kommunizieren, wobei zwischen einer Aufwärtsrichtung UL (Uplink) vom Funkkommunikationsendgerät MS zur Basisstation BS und einer Abwärtsrichtung DL (Downlink) von der Basisstation BS zu den Funkkommunikationsendgeräten MS unterschieden wird.

Die Basisstationssteuerung BSC ist über einen so genannten SGSN (Serving GPRS Support Node) sowie GGSN (Gateway GPRS Support Node) mit einem BM-SC (Broadcast-Multicast Service Center) verbunden.

Das Verfahren ist auch bei einem UMTS-Funkkommunikationssystem einsetzbar, bei dem Funkkommunikationsendgeräte als User-Equipment UE bezeichnet werden, während Basisstationen als NodeB und eine Basisstationssteuerung als RNC bezeichnet wird - hier nicht dargestellt.

Ausführliche Beschreibungen zum Aufbau einer MBMS-Datenübertragung eines MBMS-Dienstes sind beispielsweise in Kapitel 8 der technischen Spezifikation 3GPP TS 23.246 V6.2.0 (2004-03) beschrieben.

FIG 2 zeigt mit Bezug auf FIG 1 in einer vereinfachten Darstellung, wie ein einzelner Datenblock db vom Basisstationssubsystem BSS zu einer Anzahl von Funkkommunikationsendgeräten MS übertragen wird. Ein nach Aufbau eines MBMS-Kanals über den SGSN bzw. BM-SC in der Basisstationssteuerung BSC eingehender Datenblock db eines Dienstes wird in einem Speicher M gespeichert und zur Basisstation BS weitergeleitet. Der Speicher M kann beispielsweise in dem SGSN, BM-SC und/oder auch in der Basisstation BS angeordnet sein.

Von der Basisstation BS wird der Datenblock db in einem speziellen MBMS-Kanal MBMSCH über die Funkschnittstelle zu den Funkkommunikationsendgeräten MS übertragen, von diesen empfangen und detektiert. Bei einer detektierten fehlerhaften oder fehlenden Übertragung des Datenblocks db seitens eines betrachteten Funkkommunikationsendgeräts MS überträgt dieses ein so genanntes Not-Acknowledged-Signal NACK als Informationssignal unter Verwendung eines dem MBMS-Kanal MBMSCH zugeordneten Rückkanals MBMSFCH (MBMS Feedback Channel) an die Basisstation BS, die dieses Informationssignal NACK an die Basisstationssteuerung BSC weiterleitet.

Der Rückkanal MBMSFCH ist dabei als gemeinsamer Rückkanal für alle derartigen Informationssignale NACK betroffener Funkkommunikationsendgeräte MS ausgebildet.

Durch die NACK-Signalisierung erfolgt nach Ermessen des Basisstationssubsystems BSS eine nochmalige Aussendung des gespeicherten Datenblocks db seitens der Basisstation BS über den MBMS-Kanal MBMSCH zu allen Funkkommunikationsendgeräten MS.

Das Informationssignal NACK charakterisiert damit den erfolgreichen bzw. erfolglosen Empfang des Datenblocks db. Üblicherweise sind die Informationssignale NACK der Funkkommunikationsendgeräte MS identisch zueinander, so dass diese zeitlich überlagert bei der zugeordneten Basisstation BS eintreffen.

FIG 3 zeigt eine Zuordnungsvorschrift von Übertragungsverlusten zu Sendeleistungen für das erfindungsgemäße Verfahren.

Dabei sind horizontal Übertragungsverluste dp ("downlinkpathloss", dp) aufgetragen, die seitens der Funkkommunikationsendgeräte MS zu ermitteln sind, während vertikal Sendeleistungen UTXP ("uplink TX power", UTXP) aufgetragen sind, die für das zu sendende Informationssignal NACK in Aufwärtsrichtung zu verwenden sind.

Seitens der Basisstation BS wird ein Signal mit vorbekannter Leistung in Downlink-Richtung ausgesendet. Dieses Signal wird beispielsweise seitens eines ersten Funkkommunikationsendgeräts MS1 empfangen, das einen Übertragungsverlust dp<PLO als Abweichung vom vorgegebenen Leistungs-Sollwert des Signals ermittelt. Damit ergibt sich für das erste Funkkommunikationsendgerät MS1 eine zur Übermittlung des Informationssignals NACK zu verwendende Sendeleistung UTXP=TX0.

Gleiches erfolgt für ein zweites Funkkommunikationsendgerät MS2, das einen Übertragungsverlust dp mit PL0≤dp<PL1 ermittelt. Damit ergibt sich für das zweite Funkkommunikationsendgerät MS2 eine zur Übermittlung des Informationssignals NACK zu verwendende Sendeleistung UTXP=TX1.

Bei einem dritten Funkkommunikationsendgerät MS3 wird ein Übertragungsverlust dp mit PLn-1≤dp ermittelt. Damit ergibt sich für das dritte Funkkommunikationsendgerät MS3 eine zur Übermittlung des Informationssignals NACK zu verwendende Sendeleistung UTXP=TXn.

Seitens der Basisstation BS wird eine Auswertung bezüglich der im gemeinsamen Rückkanal MBMSFCH überlagert übertragenen Informationssignale NACK durchgeführt, bzw. eine Interferenzsituation in den Funkkanälen, die zum Rückkanal MBMSFCH gleich bzw. benachbart sind, ermittelt. Basierend darauf wird zur Reduzierung von Interzell- und Intrazell-Interferenzen die Zuordnung zwischen Übertragungsverlusten dp einerseits und den zu verwendenden Sendeleistungen UTXP andererseits derart vorgenommen, dass bei größeren Übertragungsverlusten dp, d.h. bei größeren Entfernungen zwischen Basisstation BS und Funkkommunikationsendgerät MS, höhere Sendeleistungen für das Informationssignal NACK verwendet werden, als bei geringeren Übertragungsverlusten dp.

Die in FIG 3 gezeigte Zuordnung wird vorteilhafterweise zur Einsparung von Funkübertragungsressourcen als Maske von der Basisstation an alle Funkkommunikationsendgeräte in Abwärtsrichtung rundgesendet.

Stellvertretend für andere Zuordnungsfunktionen zeigt FIG 3 eine stufenweise Zuordnung, jedoch sind auch andere Zuordnungsfunktionen (lineare Funktion, Kombinationen aus Stufen-und Linearfunktionen, etc.) möglich.

Das erfindungsgemäße Verfahren ist für jede Punkt-zu-Mehrpunkt-Übertragung geeignet, bei dem ein gemeinsam zugeordneter Rückkanal verwendet wird.

Ebenso wurde als Maß für die Entfernung zwischen Basisstation und einem betrachteten Funkkommunikationsendgerät ein Übertragungsverlust eines Signals verwendet. Jedoch sind in diesem Zusammenhang auch andere Verfahren möglich, die geeignet sind, als Maß für die Entfernung verwendet zu werden.

Beispielsweise könnte ausschließlich oder ergänzend ein gemittelter Signalempfangspegel in Abwärtsrichtung bei der Zuordnungsvorschrift berücksichtigt werden.
Weiterhin könnte eine am Ort des jeweiligen Funkkommunikationsendgerät vorliegende Positionsinformation ausschließlich oder ergänzend zur Sendeleistungssteuerung verwendet werden.

## Patentansprüche

1. Verfahren zur Datenübertragung in einem Funkkommunikationssystem,
- bei dem von einer Basisstation (BS) zumindest ein Daten- block (db) zu Funkkommunikationsendgeräten (MS) gemäß einer Punkt-zu-Mehrpunkt-Übertragung gesendet wird,
- bei dem von einer Anzahl empfangender Funkkommunikati- onsendgeräte (MS) ein Informationssignal (NACK) bezüg- lich des Empfangs des Datenblocks (db) zur Basisstation (BS) über einen gemeinsam nutzbaren Rückkanal (MBMSFCH) zurückgemeldet wird,
**dadurch gekennzeichnet,**
**dass** seitens jedes Funkkommunikationsendgeräts (MS), das das Informationssignal (NACK) sendet, eine Einstellung der Sendeleistung (UTXP) des Informationssignals (NACK) in Abhängigkeit der Entfernung (dp) zwischen Basisstation (BS) und jeweiligem Funkkommunikationsendgerät (MS) durchgeführt wird.

2. Verfahren nach Anspruch 1, **dadurch gekennzeichnet, dass** ein in Abwärtsrichtung (DL) von der Basisstation (BS) ausgesendetes Signal mit vorbestimmter Leistung vom Funkkommunikationsendgerät empfangen und dessen Übertragungsverlust (dp) seitens des Funkkommunikationsendgeräts (MS) als Maß für die Entfernung ermittelt wird.

3. Verfahren nach Anspruch 1 oder 2, **dadurch gekennzeichnet, dass** Funkkommunikationsendgeräte (MS) mit einer großen Entfernung zur Basisstation (BS) das Informationssignal (NACK) mit einer höheren Sendeleistung (UTXP) zurückmelden, während Funkkommunikationsendgeräte (MS) mit einer geringeren Entfernung zur Basisstation (BS) die Information (NACK) mit einer geringeren Sendeleistung (UTXP) zurückmelden.

4. Verfahren nach einem der vorhergehenden Ansprüche, **dadurch gekennzeichnet, dass** eine Zuordnungsvorschrift zur Zuordnung von Entfernungen (dp) einerseits und der zu verwendenden Sendeleistungen (UTXP) andererseits seitens der Basisstation (BS) festgelegt und in Abwärtsrichtung übertragen wird oder dass die Zuordnungsvorschrift seitens der Funkkommunikationsendgeräte (MS) vorbekannt ist.

5. Verfahren nach Anspruch 4, **dadurch gekennzeichnet,**
- **dass** zur Festlegung der Zuordnungsvorschrift die Basis- station (BS) überlagerte Informationssignale (NACK) im gemeinsamen Rückkanal (MBMSFCH) analysiert und/oder eine Interferenzsituation in Funkkanälen analysiert, die zum Rückkanal (MBMSFCH) gleich bzw. benachbart sind, und
- **dass** die Zuordnungsvorschrift unter Beachtung minimier- ter Interferenzen erstellt wird.

6. Verfahren nach Anspruch 4 oder 5, **dadurch gekennzeichnet, dass** die Zuordnung anhand einer gestuften Funktion unter Verwendung von Schwellwerten (PLO, ..., PLn-1) durchgeführt wird.

7. Verfahren nach einem der Ansprüche 4 bis 6, **dadurch gekennzeichnet, dass** die Zuordnungsvorschrift von der Basisstation (BS) in Abwärtsrichtung rundgesendet wird.

8. Verfahren nach einem der Ansprüche 2 bis 7, **dadurch gekennzeichnet,**
- **dass** zusätzlich zum oder anstelle des am Funkkommunika- tionsendgerät (MS) ermittelten Übertragungsverlusts (dp) ein gemittelter Empfangspegel eines Signals in Abwärts- richtung als Entfernungsmaß verwendet wird, und/oder
- **dass** am Funkkommunikationsendgerät (MS) vorliegende Po- sitionsinformationen zur Sendeleistungseinstellung (UTXP) verwendet werden.

9. Verfahren nach einem der vorhergehenden Ansprüche, **dadurch gekennzeichnet, dass** der einem unidirektionalen Broadcast-und/oder Multicast-Dienst zugeordnete Datenblock (db) in einem dem Broadcast und/oder Multicast-Dienst zugeordneten Kanal (MBMSCH) übertragen wird.

10. Verfahren nach einem der vorhergehenden Ansprüche, **dadurch gekennzeichnet, dass** der Datenblock (db) zur MBMS-Datenübertragung verwendet wird.

11. Verfahren nach einem der Ansprüche 4 bis 10, **dadurch gekennzeichnet, dass** die Zuordnungsvorschrift vor Beginn einer Datenübertragung übermittelt und/oder während der Datenübertragung aktualisiert wird.
